# EUROPÄISCHE PATENTSCHRIFT

(11) **EP 3 578 317 B1**
(45) Veröffentlichungstag und Bekanntmachung des Hinweises auf die Patenterteilung: **30.06.2021**
(21) Anmeldenummer: 19172421.0
(22) Anmeldetag: 02.05.2019
(51) Int. Cl.: B25F 5/00, B25F 5/02

(54) **HANDWERKZEUGMASCHINE**
HANDHELD MACHINE TOOL
MACHINE-OUTIL PORTABLE

(30) Priorität: 08.06.2018 DE 102018113730
(43) Veröffentlichungstag der Anmeldung: 11.12.2019
(73) Patentinhaber: C. & E. Fein GmbH, 73529 Schwäbisch Gmünd-Bargau (DE)
(72) Erfinder: Dürnegger, Wolfgang, 73529 Schwäbisch Gmünd-Bargau (DE); Fahrner, Horst, 73529 Schwäbisch Gmünd-Bargau (DE)
(74) Vertreter: Wallinger, Michael

(56) Entgegenhaltungen:
- EP-A1- 2 944 423
- DE-A1- 10 303 400
- DE-A1-102008 009 277
- DE-A1-102015 225 783
- DE-A1-102016 106 557
- DE-A1-102016 213 618
- DE-U1-202005 007 594
- JP-A- 2010 036 260

## Beschreibung

Die Erfindung betrifft eine Handwerkzeugmaschine mit einem eine Motorwelle antreibenden Antrieb, der in einem Maschinengehäuse aufgenommen ist, in dem mindestens ein durch ein Staubschutzelement überdeckter Lufteinlass ausgebildet ist sowie mit einer Werkzeugschnittstelle zum Anschließen eines Werkzeugs, wobei das Staubschutzelement entlang einer Einschubrichtung auf das Maschinengehäuse aufgeschoben und an dem Maschinengehäuse gesichert ist, wobei das Maschinengehäuse mindestens zweiteilig gebildet ist und ein erstes Gehäuseteil und ein zweites Gehäuseteil umfasst, wobei das Staubschutzelement durch das zweite Gehäuseteil an dem ersten Gehäuseteil gesichert ist.

Bei Handwerkzeugmaschinen, beispielsweise bei Winkelschleifern, besteht das Problem, dass bei der Materialbearbeitung Späne entstehen, die - wenn sie in das Innere der Handwerkzeugmaschine gelangen - diese beschädigen können. Dieses Problem tritt insbesondere bei der Metallbearbeitung auf, da die hierbei entstehenden Partikel und Späne elektrisch leitend sind, so dass die Gefahr besteht, dass - wenn diese in das Innere der Handwerkzeugmaschine gelangen - Kurzschlüsse entstehen können, wodurch unter Umständen die Handwerkzeugmaschine selbst unter Spannung gesetzt wird, was mit der Gefahr eines Stromschlages für den Nutzer verbunden wäre. Daher werden häufig Staubschutzelemente verwendet, die den Lufteinlass überdecken und mit denen ein Eindringen von Verunreinigungen in das Innere der Handwerkzeugmaschine verhindert werden soll.

Derartige Handwerkzeugmaschinen sind beispielsweise aus der der DE 10 2015 225 783 A1 bekannt. Bei dieser Handwerkzeugmaschine wird ebenfalls ein Staubfilter verwendet, der auf das Gehäuse aufgeschoben wird. Dieser greift dabei in Gehäusespalten ein und wird dort durch einen als Gehäusetüllendeckelelement bezeichneten Deckel gesichert, der mit dem Gehäuse verschraubt wird.

Aus der DE 10 2008 009 227 A1 ist eine Handwerkzeugmaschine bekannt, bei der das Staubschutzelement, mit dem das Innere der Handwerkzeugmaschine vor dem Eindringen von Verunreinigungen, insbesondere vor dem Eindringen von Metallspänen, geschützt wird, von unten auf die Maschine aufgeklipst wird. Hierbei hat es sich jedoch als nachteilig erwiesen, dass beim Aufklipsen des Staubschutzes dieser zum Teil aufgebogen werden muss, um in das Maschinengehäuse eingeklipst zu werden. Auch besteht durch diese Art der Befestigung das Problem, dass der Staubschutz nicht sicher an der Maschine befestigt ist, da sich dieser insbesondere bei auftretenden Vibrationen von der Handwerkzeugmaschine lösen und abrutschen kann.

Auch bei der aus der EP 2 944 423 A1 bekannten Handwerkzeugmaschine wird der Filter durch eine Rastverbindung an dem Gehäuse der Handwerkzeugmaschine befestigt. Dieses gilt auch für die aus der DE 10 2016 106 557 A1 bekannte Schleifmaschine, bei der das Filterelement ebenfalls durch eine Rastverbindung an dem Motorgehäuse gesichert wird. Eine ähnliche Lösung ist auch aus DE 10 2016 213 618 A1 bekannt, bei der der Filter zunächst auf das Gehäuse geschoben und dort ebenfalls mittels einer Rastverbindung gesichert wird.

Die DE 20 2005 007 594 zeigt eine Kettensäge, die einen Gehäusedeckel aufweist, der über Federklammern an dem Gehäuse befestigt werden kann. Dabei ist die Federklammer an einem Ende gelenkig und unverlierbar gehalten.

Die JP 2010 036 260 A zeigt eine Handwerkzeugmaschine, bei der ein Staubschutz mit einem Filter vorgesehen ist, der mit der Handwerkzeugmaschine verschraubt wird und der luftdurchlässig aber wasserundurchlässig ausgeführt ist.

Aus der der DE 103 03 400 A1 ist die Sicherung des Teils des Gehäuses, in dem die Lüftungsöffnungen ausgebildet sind, mit zwei Schrauben oder Bolzen dargestellt.

Der vorliegenden Erfindung liegt daher die Aufgabe zugrunde, die oben genannten Nachteile zu reduzieren und eine verbesserte Befestigung des Staubschutzelements an der Handwerkzeugmaschine und einen verbesserten Staubschutz bereitzustellen.

Diese Aufgabe wird gemäß der Erfindung bei einer Handwerkzeugmaschine der eingangs genannten Art dadurch gelöst, dass zwischen dem ersten Gehäuseteil und dem zweiten Gehäuseteil und zwischen dem Staubschutzelement und dem zweiten Gehäuseteil eine Nut-Spund-Verbindung ausgebildet ist.

Indem das Staubschutzelement lediglich auf das Maschinengehäuse in der Einschubrichtung aufgeschoben werden muss, wird eine besonders einfache Befestigungsmöglichkeit bereitgestellt, die ohne eine elastische Verformung des Staubschutzelements dessen Sicherung an dem Maschinengehäuse ermöglicht, was sich positiv auf den Montageaufwand und die Langlebigkeit des Staubschutzelements auswirkt. Hierbei kann die Einschubrichtung im Wesentlichen parallel oder im Wesentlichen senkrecht zu der Motorwelle orientiert sein. Die Formulierung "im Wesentlichen parallel" umfasst dabei einen Winkelbereich zwischen der Motorwelle und der Einschubrichtung, der bevorzugt zwischen -35° und 35° liegt und der besonders bevorzugt bei 0° liegt. Die Formulierung "im Wesentlichen senkrecht" umfasst dabei einen Winkelbereich zwischen der Motorwelle und der Einschubrichtung, der bevorzugt zwischen 55° und 125° liegt und der besonders bevorzugt bei 90° liegt. Das Einschieben entlang der Einschubrichtung kann dabei sowohl von der der Werkzeugschnittstelle abgewandten Seite her - also von hinten - oder von der dieser zugewandten Seite her erfolgen - also von vorn.

Als besonders vorteilhaft hat es sich dabei auch erwiesen, wenn das Maschinengehäuse mindestens zweiteilig gebildet ist und ein erstes Gehäuseteil und ein zweites Gehäuseteil umfasst, wobei das Staubschutzelement durch das zweite Gehäuseteil an dem ersten Gehäuseteil gesichert ist. Hierdurch wird erreicht, dass das auf das erste Gehäuseteil aufgeschobene Staubschutzelement letztlich durch das zweite Gehäuseteil gesichert wird, wodurch insbesondere die axiale Lage des Staubschutzelements im montiertem Zustand der Handwerkmaschine festgelegt ist und sich diese insbesondere auch bei auftretenden Vibrationen nicht von der Handwerkzeugmaschine lösen kann.

Bewährt hat es sich auch, wenn das Staubschutzelement das Maschinengehäuse an dessen Außenseite zumindest teilweise umfasst und einen Aufnahmeabschnitt aufweist, mit dem ein an dem Maschinengehäuse ausgebildeter Kopplungsabschnitt wechselwirkt. Durch die Verwendung des Aufnahmeabschnitts, der an dem Staubschutzelement ausgebildet ist, und durch den korrespondierenden Kopplungsabschnitt, der dem Maschinengehäuse zugeordnet ist, wird letztlich die Einschubrichtung definiert und eine Führung für das Staubschutzelement gebildet, die eine besonders einfache Möglichkeit darstellt, das Staubschutzelement auf das Maschinengehäuse aufzuschieben und daran zu sichern.

Die Führung lässt sich insbesondere auch dadurch noch vereinfachen, dass der Aufnahmeabschnitt eine Hinterschneidung aufweist. Durch diese Hinterschneidung wird letztlich eine Schiene bereitgestellt, die als Führung dient, so dass ein Monteur bei der Montage lediglich das Staubschutzelement mit der an dem Aufnahmeabschnitt ausgebildeten Hinterschneidung auf den korrespondierenden Kopplungsabschnitt des Maschinengehäuses aufschieben muss, wodurch die Montage weiter erleichtert wird. In diesem Zusammenhang hat es sich auch bewährt, wenn die Hinterschneidung einen L-förmigen Querschnitt aufweist. Durch den L-förmigen Querschnitt der Hinterschneidung wird auch senkrecht zu der Einschubrichtung eine Führung bereitgestellt, was sich günstig auf die Positionierung des Staubschutzelements an dem Maschinengehäuse auswirkt. Im Rahmen der Erfindung ist es dabei insbesondere auch vorgesehen, dass der Kopplungsabschnitt und der Aufnahmeabschnitt jeweils mehrfach, besonders bevorzugt zweifach vorgesehen ist.

Der Sitz des Staubschutzelements in dem Maschinengehäuse kann dabei noch dadurch weiter verbessert werden, wenn an dem Staubschutzelement mindestens eine Sicherungsnase ausgebildet ist, die in mindestens eine an dem Maschinengehäuse ausgebildete Sicherungsaussparung eingreift zur Bildung einer Rastverbindung. Durch die Sicherungsaussparung wird ein Anschlag bereitgestellt, der das Aufschieben des Staubschutzelements auf das Maschinengehäuse entlang der Einschubrichtung begrenzt, wodurch insbesondere die axiale Position des Staubschutzelements auf dem Maschinengehäuse definiert ist. Die Rastverbindung stellt dabei letztlich eine Sicherung des Staubschutzelements an dem Maschinengehäuse dar.

Als günstig hat es sich auch gezeigt, wenn zwischen dem ersten Gehäuseteil und dem zweiten Gehäuseteil und/oder zwischen dem Staubschutzelement und dem zweiten Gehäuseteil eine Nut-Spund-Verbindung ausgebildet ist. Durch die Verwendung der Nut-Spund-Verbindung zwischen dem ersten Gehäuseteil und dem zweiten Gehäuseteil lässt sich deren Position zueinander festlegen. Zudem wird dadurch ein Eindringen von Verunreinigungen, wie beispielsweise elektrisch leitende Partikel beziehungsweise Späne, in das Innere des Maschinengehäuses an der Kontaktstelle zwischen dem ersten Gehäuseteil und dem zweiten Gehäuseteil effektiv verhindert. Wenn zudem zwischen dem zweiten Gehäuseteil und dem Staubschutzelement ebenfalls eine Nut-Spund-Verbindung ausgebildet wird, so lässt sich hierdurch insbesondere die Position des Staubschutzelements festlegen. Von der Bezeichnung Nut-Spund-Verbindung sind explizit auch Nut-Feder-Verbindungen umfasst.

Als besonders vorteilhaft hat es sich weiterhin auch erwiesen, wenn an dem zweiten Gehäuseteil eine Einführschräge ausgebildet ist. Hierdurch wird beim Einsetzen des zweiten Gehäuseteils auf das erste Gehäuseteil das Staubschutzelement durch die an dem zweiten Gehäuseteil ausgebildete Einführschräge axial in Einschubrichtung verstellt, wodurch eventuell vorhandenes Spiel zwischen dem Staubschutzelement und dem ersten Gehäuseteil reduziert wird.

Um ein Eindringen von Verunreinigungen, beispielsweise von metallischen Spänen und Partikeln, in das Innere des Maschinengehäuses zu verhindern, hat es sich zudem als vorteilhaft erwiesen, wenn dem Staubschutzelement mindestens eine Siebstruktur zugeordnet ist, die bei aufgeschobenem Staubschutzelement den mindestens einen Lufteinlass zumindest teilweise überlappt. Die Siebstruktur kann dabei einstückig gebildet sein oder mehrere Abschnitte umfassen. Auch kann die Siebstruktur in das Staubschutzelement eingegossen oder anderweitig daran befestigt sein, beispielsweise durch Verkleben. In diesem Zusammenhang hat es sich auch bewährt, wenn die Siebstruktur eine Maschenweite aufweist, die zwischen 0,100 mm und 0,500 mm liegt und besonders bevorzugt bei 0,250 mm liegt. Durch die Wahl der Maschenweite kann gesteuert werden, ab welcher Partikelgröße Partikel in die Handwerkzeugmaschine gelangen können. So kann die Maschenweite so gewählt sein, dass Partikel, die die Funktionalität bzw. die Lebensdauer der erfindungsgemäßen Handwerkzeugmaschine negativ beeinflussen würden, durch die Siebstruktur zurückgehalten werden. Wird die Maschenweite der Siebstruktur jedoch zu gering gewählt, so führt dies dazu, dass die Durchströmung der Handwerkzeugmaschine mit Kühlluft nicht ausreichend gewährleistet ist, was sich ebenfalls als nachteilig erweisen würde.

Der Montageaufwand lässt sich insbesondere dadurch weiter reduzieren, dass das erste Gehäuseteil und das zweite Gehäuseteil durch eine Schraubverbindung miteinander verbunden sind. Durch die Schraubverbindung lassen sich die beiden Gehäuseteile besonders einfach miteinander verbinden, so dass insbesondere auch ein Austausch des Staubschutzelements, beispielsweise zu Reinigungszwecken oder Wartungsarbeiten, möglich ist.

Im Folgenden wird die Erfindung an einem in den Zeichnungen dargestellten Ausführungsbeispiel näher erläutert; es zeigen:
- Fig. 1: eine teilgeschnittene Explosionsdarstellung einer Handwerkzeugmaschine,
- Fig. 2: eine Seitenansicht eines Teils eines Maschinengehäuses der Handwerkzeugmaschine,
- Fig. 3: eine perspektivische Schnittansicht entlang des Schnittes III-III aus der Figur 2,
- Fig. 4: eine perspektivische Schnittansicht entlang des Schnittes IV-IV aus der Figur 2, und
- Fig. 5: eine perspektivische Ansicht eines Staubschutzelements der Handwerkzeugmaschine.

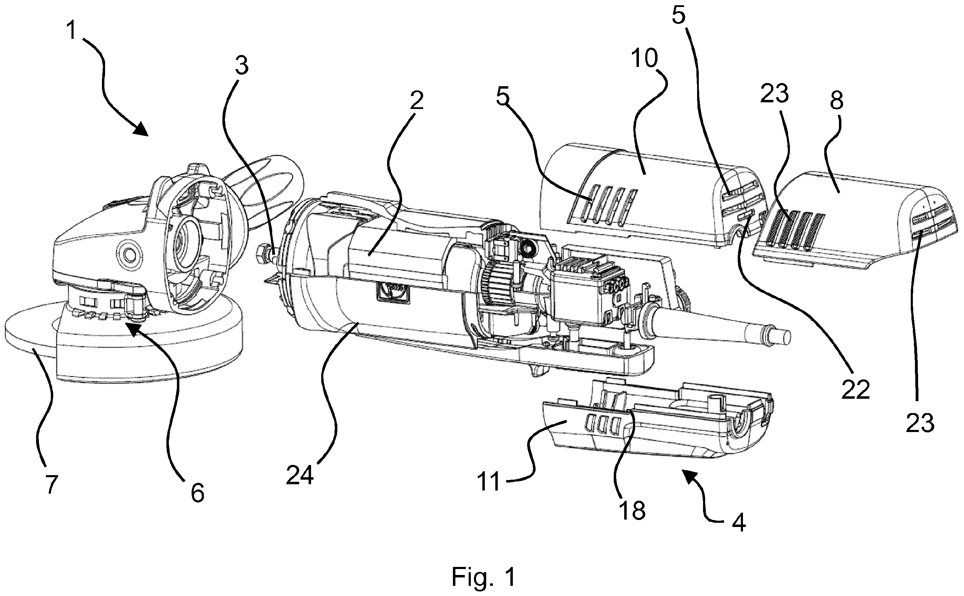

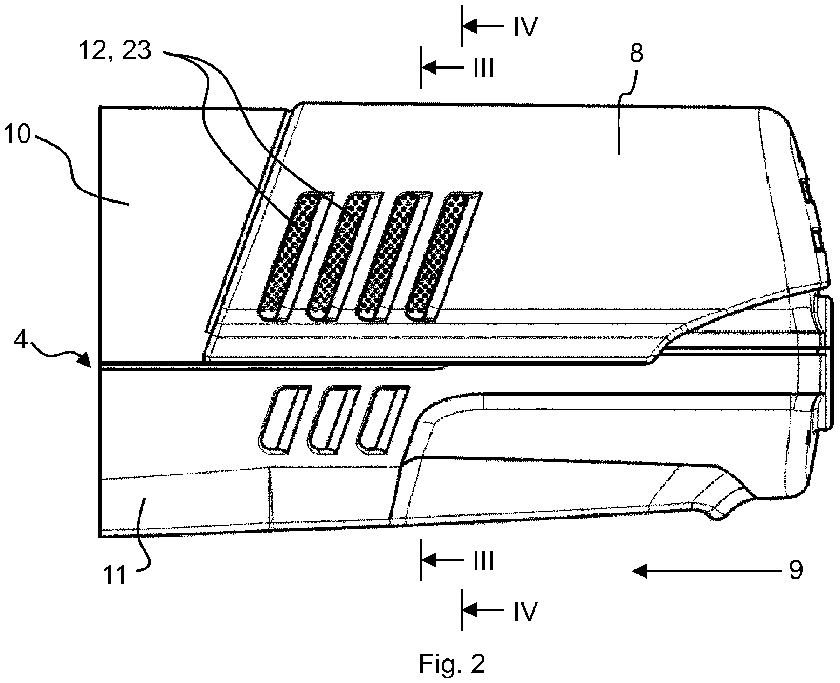

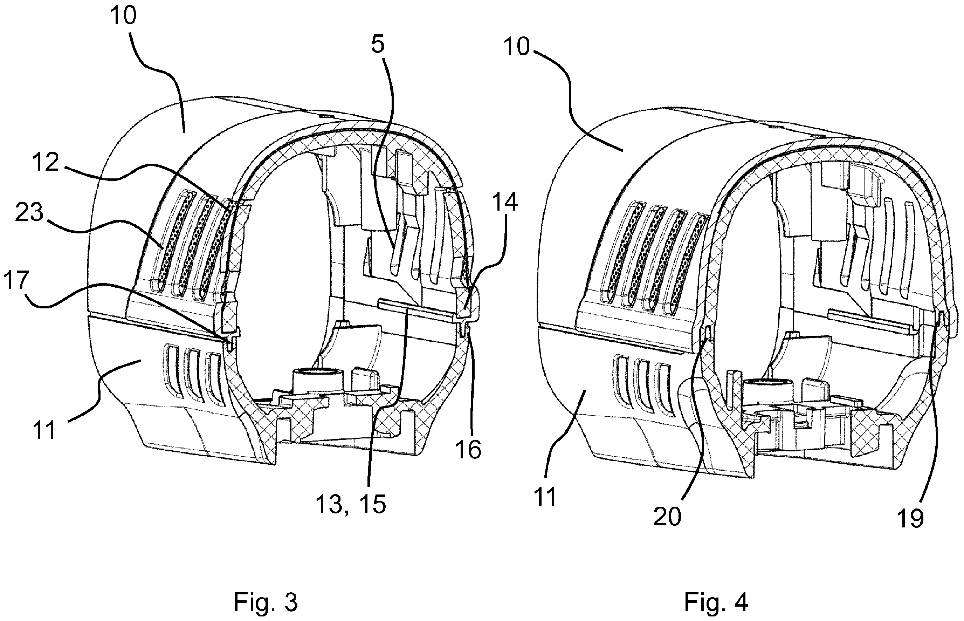

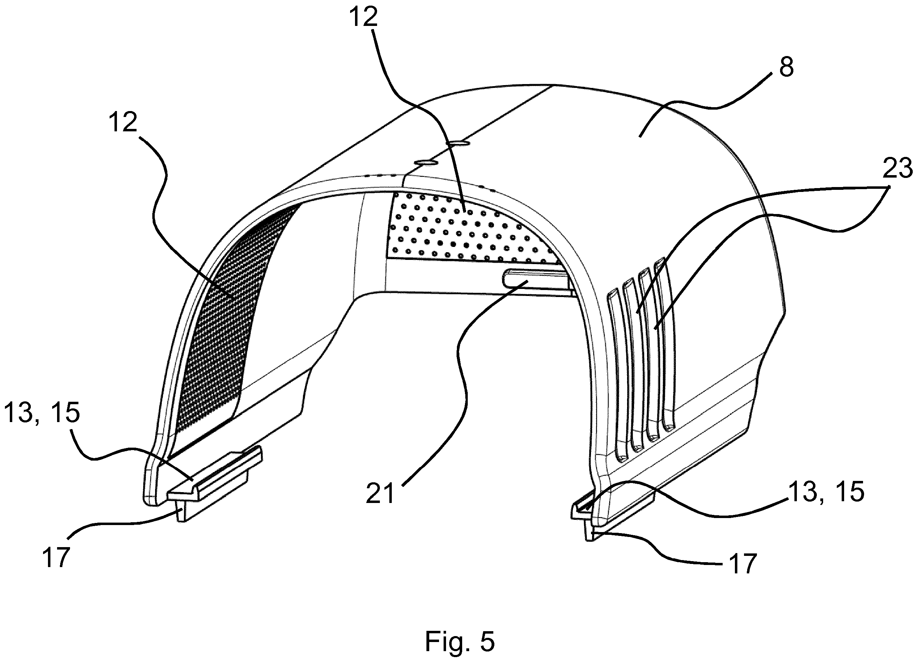

Figur 1 zeigt in einer Explosionsdarstellung eine erfindungsgemäße Handwerkzeugmaschine 1, die in dem gezeigten Ausführungsbeispiel als ein Winkelschleifer gebildet ist. Die Handwerkzeugmaschine 1 weist dabei einen Antrieb 2 mit einer Motorwelle 3 auf, der in einem Motorgehäuse 24 aufgenommen ist, das Teil eines Maschinengehäuses 4 ist, in dem mindestens ein Lufteinlass 5 ausgebildet ist. Weiterhin weist die Handwerkzeugmaschine 1 eine Werkzeugschnittstelle 6 auf, an der ein Werkzeug 7 befestigt ist, das in dem gezeigten Ausführungsbeispiel als eine Schleifscheibe gebildet ist. Im Bereich des mindestens einen Lufteinlasses 5 lässt sich ein Staubschutzelement 8 befestigen, das entlang einer im Wesentlichen parallel zu der Längsachse der Motorwelle 3 orientierten Einschubrichtung 9 auf das Maschinengehäuse 4 aufgeschoben werden kann, wie insbesondere aus der Figur 2 erkennbar ist. Das Maschinengehäuse 4 ist dabei mehrteilig gebildet und umfasst neben dem Motorgehäuse 24 im Bereich des Staubschutzelements 8 einen ersten Gehäuseteil 10 und einen zweiten Gehäuseteil 11, die bei der Montage miteinander verbunden werden. Die Lage, insbesondere die axiale Lage, des Staubschutzelements 8 relativ zu dem ersten Gehäuseteil 10 ist dabei durch den zweiten Gehäuseteil 11 festgelegt, wie nachstehend insbesondere noch anhand der Figuren 3 und 4 näher erläutert wird. Zwischen dem Staubschutzelement 8 und dem ersten Gehäuseteil 10 ist eine Rastverbindung gebildet durch eine Sicherungsnase 21, die dem Staubschutzelement 8 zugeordnet ist und in der Figur 5 zu erkennen ist, und einer korrespondierenden Sicherungsaussparung 22, die an dem ersten Gehäuseteil 10 ausgebildet ist.

Figur 2 zeigt in einer Seitenansicht das Maschinengehäuse 4 im Bereich des Staubschutzelements 8. Dieser Figur ist insbesondere zu entnehmen, dass das Staubschutzelement 8 Durchlassöffnungen 23 aufweist, die durch eine Siebstruktur 12 geschützt sind und die bei aufgeschobenem Staubschutzelement 8 den mindestens einen Lufteinlass 5 zumindest teilweise überdeckt. Die Maschenweite der Siebstruktur 12 beträgt dabei 0,250 mm.

Figur 3 zeigt in einer perspektivischen Ansicht den Schnitt III-III durch das Maschinengehäuse 4 aus der Figur 2. Hieraus ist insbesondere zu erkennen, dass das Staubschutzelement 8 einen Aufnahmeabschnitt 13 aufweist, in den ein an dem ersten Gehäuseteil 10 ausgebildeter Kopplungsabschnitt 14 eingreift. Der Aufnahmeabschnitt 13 des Staubschutzelements 8 weist dabei eine Hinterschneidung 15 mit einem L-förmigen Querschnitt auf. Zwischen dem Staubschutzelement 8 und dem zweiten Gehäuseteil 11 ist in dem gezeigten Ausführungsbeispiel eine Nut-Spund-Verbindung gebildet mit einer dem zweiten Gehäuseteil 11 zugeordneten Nut 16 und einem Spund 17, der an dem Staubschutzelement 8 ausgebildet ist. Wie der Schnittansicht der Figur 3 außerdem zu entnehmen ist, ist das Staubschutzelement 8 dabei an die äußere Gestaltung des ersten Gehäuseteils 10 angepasst, wodurch das Staubschutzelement 8 einfach auf dieses aufgeschoben werden kann. Aufgeschoben liegt das Staubschutzelement 8 dann flächig oder zumindest abschnittsweise an dem Außenumfang des ersten Gehäuseteils 10 an und die Kopplungsabschnitte 14 des ersten Gehäuseteils 10 sind in den korrespondierenden Hinterschneidungen 15 der Aufnahmeabschnitte 13 des Staubschutzelements 8 aufgenommen. Wird nun das zweite Gehäuseteil 11 mit dem ersten Gehäuseteil 10 verbunden, so greift der Spund 17 in die Nut 16 ein, wodurch die Nut-Spund-Verbindung zwischen dem zweiten Gehäuseteil 11 und dem Staubschutzelement 8 hergestellt wird und das Staubschutzelement 8 an dem Maschinengehäuse 4 gesichert wird.

Wie der in der Figur 4 dargestellten Schnittansicht entlang des Schnittes IV-IV aus der Figur 2 zu entnehmen ist, besteht auch zwischen dem ersten Gehäuseteil 10 und dem zweiten Gehäuseteil 11 eine Nut-Spund-Verbindung. Dabei sind in dem gezeigten Ausführungsbeispiel in dem ersten Gehäuseteil 10 Montagenuten 19 ausgebildet, in die jeweils ein dem zweiten Gehäuseteil 11 zugeordneter Sicherungsspund 20 eingreift zur Bildung der Nut-Spund-Verbindung zwischen dem ersten Gehäuseteil 10 und dem zweiten Gehäuseteil 11. Durch diese Nut-Spund-Verbindung wird zusätzlich verhindert, dass sich das Staubschutzelement 8 entgegen der Einschubrichtung 9 axial verstellen kann, da das Staubschutzelement 8 durch die Nut-Spund-Verbindungen in seiner Axiallage festgelegt ist. Hierzu dienen auch die Einführschrägen 18, die an dem zweiten Gehäuseteil 11 ausgebildet sind und mit denen das Staubschutzelement 8 beim Aufsetzen des zweiten Gehäuseteils 11 axial in Richtung der Motorwelle 3 verstellt wird. Figur 5 zeigt in einer perspektivischen Ansicht das Staubschutzelement 8 mit der darin befindlichen Siebstruktur 12, die in dem gezeigten Ausführungsbeispiel mehrere Abschnitte mit einer Maschenweite von jeweils 0,250 mm aufweist. Weiterhin ist dem Staubschutzelement 8 an der dem Antrieb 2 abgewandten Stirnseite die Sicherungsnase 21 zu entnehmen, die in die an dem ersten Gehäuseteil 10 ausgebildete Sicherungsaussparung 22 eingreift, um in Einschubrichtung 9 eine - bezogen auf die Motorwelle 3 - axial wirkende Rastverbindung zwischen dem Staubschutzelement 8 und dem ersten Gehäuseteil 10 zu bilden.

Im Folgenden wird noch einmal die Montage der erfindungsgemäßen Handwerkzeugmaschine 1, insbesondere die Montage des Staubschutzelements 8 erläutert. Zunächst wird das Staubschutzelement 8 entlang der Einschubrichtung 9, die bevorzugt parallel zu der Motorwelle 3 orientiert ist, auf das erste Gehäuseteil 10 axial aufgeschoben. Dabei greifen die Kopplungsabschnitte 14, die an dem ersten Gehäuseteil 10 ausgebildet sind, in die korrespondierenden Aufnahmeabschnitte 13 ein, die an dem Staubschutzelement 8 ausgebildet sind und die jeweils die Hinterschneidung 15 mit einem L-förmigen Querschnitt aufweisen. Das Staubschutzelement 8 verrastet dabei mit seiner Sicherungsnase 21 mit der Sicherungsaussparung 22, die an der Außenseite der dem Antrieb 2 abgewandten Stirnseite des ersten Gehäuseteils 10 ausgebildet ist. Hierdurch wird eine Rastverbindung zwischen dem Staubschutzelement 8 und dem ersten Gehäuseteil 10 gebildet. In einem weiteren Schritt wird das zweite Gehäuseteil 11 senkrecht zu der Einschubrichtung 9 auf die aus dem ersten Gehäuseteil 10 und dem Staubschutzelement 8 gebildete Einheit aufgesetzt, wobei zwischen den an dem Staubschutzelement 8 ausgebildeten Spunden 17 und den an dem zweiten Gehäuseteil 11 ausgebildeten Nuten 16 einerseits sowie zwischen den an dem zweiten Gehäuseteil 11 ausgebildeten Sicherungsspunden 20 sowie den Montagenuten 19, die dem ersten Gehäuseteil 10 zugeordnet sind, andererseits jeweils eine Nut-Spund-Verbindung hergestellt wird. Durch die an dem zweiten Gehäuseteil 11 ausgebildeten Einführschrägen 18 wird bei dem Einsetzen des zweiten Gehäuseteils 11 auf die aus dem ersten Gehäuseteil 10 und dem Staubschutzelement 8 gebildete Einheit auf das Staubschutzelement 8 eine axiale Kraft in die Einschubrichtung 9 ausgeübt, wodurch eventuell vorhandenes Spiel zwischen dem Staubschutzelement 8 und dem ersten Gehäuseteil 10 eliminiert, zumindest aber reduziert wird.

### Bezugszeichenliste

- 1: Handwerkzeugmaschine
- 2: Antrieb
- 3: Motorwelle
- 4: Maschinengehäuse
- 5: Lufteinlass
- 6: Werkzeugschnittstelle
- 7: Werkzeug
- 8: Staubschutzelement
- 9: Einschubrichtung
- 10: erstes Gehäuseteil
- 11: zweites Gehäuseteil
- 12: Siebstruktur
- 13: Aufnahmeabschnitt
- 14: Kopplungsabschnitt
- 15: Hinterschneidung
- 16: Nut
- 17: Spund
- 18: Einführschräge
- 19: Montagenut
- 20: Sicherungsspund
- 21: Sicherungsnase
- 22: Sicherungsaussparung
- 23: Durchlassöffnung
- 24: Motorgehäuse

## Patentansprüche

1. Handwerkzeugmaschine (1) mit einem eine Motorwelle (3) antreibenden Antrieb (2), der in einem Maschinengehäuse (4) aufgenommen ist, in dem mindestens ein durch ein Staubschutzelement (8) überdeckter Lufteinlass (5) ausgebildet ist sowie mit einer Werkzeugschnittstelle (6) zum Anschließen eines Werkzeugs (7), wobei das Staubschutzelement (8) entlang einer Einschubrichtung (9) auf das Maschinengehäuse (4) aufgeschoben und an dem Maschinengehäuse (4) gesichert ist, wobei das Maschinengehäuse (4) mindestens zweiteilig gebildet ist und ein erstes Gehäuseteil (10) und ein zweites Gehäuseteil (11) umfasst, wobei das Staubschutzelement (8) durch das zweite Gehäuseteil (11) an dem ersten (10) Gehäuseteil gesichert ist, **dadurch gekennzeichnet, dass** zwischen dem ersten Gehäuseteil (10) und dem zweiten Gehäuseteil (11) und zwischen dem Staubschutzelement (8) und dem zweiten Gehäuseteil (11) eine Nut-Spund-Verbindung ausgebildet ist.

2. Handwerkzeugmaschine (1) nach Anspruch 1, **dadurch gekennzeichnet, dass** das Staubschutzelement (8) das Maschinengehäuse (4) an dessen Außenseite zumindest teilweise umfasst und einen Aufnahmeabschnitt (13) aufweist, mit dem ein an dem Maschinengehäuse (4) ausgebildeter Kopplungsabschnitt (14) wechselwirkt.

3. Handwerkzeugmaschine (1) nach Anspruch 2, **dadurch gekennzeichnet, dass** der Aufnahmeabschnitt (13) eine Hinterschneidung (15) aufweist.

4. Handwerkzeugmaschine (1) nach Anspruch 3, **dadurch gekennzeichnet, dass** die Hinterschneidung (15) einen L-förmigen Querschnitt aufweist.

5. Handwerkzeugmaschine (1) nach einem der Ansprüche 1 bis 4, **dadurch gekennzeichnet, dass** an dem Staubschutzelement (8) mindestens eine Sicherungsnase (21) ausgebildet ist, die in mindestens eine an dem Maschinengehäuse (4) ausgebildete Sicherungsaussparung (22) eingreift zur Bildung einer Rastverbindung.

6. Handwerkzeugmaschine (1) nach einem der Ansprüche 1 bis 5, **dadurch gekennzeichnet, dass** an dem zweiten Gehäuseteil (11) eine Einführschräge (18) ausgebildet ist.

7. Handwerkzeugmaschine (1) nach einem der Ansprüche 1 bis 6, **dadurch gekennzeichnet, dass** dem Staubschutzelement (8) mindestens eine Siebstruktur (12) zugeordnet ist, die bei aufgeschobenem Staubschutzelement (8) den mindestens einen Lufteinlass (5) zumindest teilweise überlappt.

8. Handwerkzeugmaschine (1) nach Anspruch 7, **dadurch gekennzeichnet, dass** die Siebstruktur (12) eine Maschenweite aufweist, die zwischen 0,100 mm und 0,500 mm liegt und besonders bevorzugt bei 0,250 mm liegt.

9. Handwerkzeugmaschine (1) nach einem der Ansprüche 1 bis 8, **dadurch gekennzeichnet, dass** das erste Gehäuseteil (10) und das zweite Gehäuseteil (11) durch eine Schraubverbindung miteinander verbunden sind.

## Claims

1. A hand-held power tool (1) having a drive (2) which drives a motor shaft (3) accommodated in a machine housing (4) in which at least one air inlet (5) covered by a dust protection element (8) is formed as well as a tool interface (6) for connecting a tool (7), wherein the dust protection element (8) is pushed onto the machine housing (4) along a direction of insertion (9) and secured to the machine housing (4), wherein the machine housing (4) is of at least two-part design and comprises a first housing part (10) and a second housing part (11), wherein the dust protection element (8) is secured to the first housing part (10) by the second housing part (11), **characterized in that** a tongue-and-groove joint is formed between the first housing part (10) and the second housing part (11) and between the dust protection element (8) and the second housing part (11).

2. The hand-held power tool (1) according to claim 1, **characterized in that** the dust protection element (8) at least partially encloses the exterior of the machine housing (4) and comprises a receiving section (13) with which a coupling section (14) formed on the machine housing (4) interacts.

3. The hand-held power tool (1) according to claim 2, **characterized in that** the receiving section (13) exhibits an undercut (15).

4. The hand-held power tool (1) according to claim 3, **characterized in that** the undercut (15) has an L-shaped cross section.

5. The hand-held power tool (1) according to one of claims 1 to 4, **characterized in that** at least one securing lug (21) is formed on the dust protection element (8) which engages in at least one securing notch (22) formed on the machine housing (4) to form a latching connection.

6. The hand-held power tool (1) according to one of claims 1 to 5, **characterized in that** a lead-in chamfer (18) is formed on the second housing part (11).

7. The hand-held power tool (1) according to one of claims 1 to 6, **characterized in that** at least one screen structure (12) is allotted to the dust protection element (8) which at least partially overlaps the at least one air inlet (5) once the dust protection element (8) is pushed on.

8. The hand-held power tool (1) according to claim 7, **characterized in that** the screen structure (12) has a mesh width of between 0.100 mm and 0.500 mm and particularly preferentially 0.250 mm.

9. The hand-held power tool (1) according to one of claims 1 to 8, **characterized in that** the first housing part (10) and the second housing part (11) are connected to each other by a screwed fitting.

## Revendications

1. Machine-outil manuelle (1) avec un entraînement (2) entraînant un arbre de moteur (3), qui est logé dans un carter de machine (4), dans lequel est réalisée au moins une entrée d'air (5) recouverte par un élément de protection contre les poussières (8), ainsi qu'avec une interface d'outil (6) pour raccorder un outil (7), dans laquelle l'élément de protection contre les poussières (8) est enfilé sur le carter de machine (4) le long d'une direction d'introduction par glissement et est bloqué sur le carter de machine (4), dans laquelle le carter de machine (4) est formé au moins en deux parties et comprend une première partie de carter (10) et une deuxième partie de carter (11), dans laquelle l'élément de protection contre les poussières (8) est bloqué par la deuxième partie de carter (11) sur la première partie de carter (10), **caractérisée en ce qu'**une liaison à rainure-languette est réalisée entre la première partie de carter (10) et la deuxième partie de carter (11) et entre l'élément de protection contre les poussières (8) et la deuxième partie de carter (11).

2. Machine-outil manuelle (1) selon la revendication 1, **caractérisée en ce que** l'élément de protection contre les poussières (8) comprend au moins en partie le carter de machine (4) sur son côté extérieur et présente une section de logement (13), avec laquelle une section de couplage (14) réalisée sur le carter de machine (4) interagit.

3. Machine-outil manuelle (1) selon la revendication 2, **caractérisée en ce que** la section de logement (13) présente une contre-dépouille (15).

4. Machine-outil manuelle (1) selon la revendication 3, **caractérisée en ce que** la contre-dépouille (15) présente une section transversale en forme de L.

5. Machine-outil manuelle (1) selon l'une quelconque des revendications 1 à 4, **caractérisée en ce qu'**est réalisé sur l'élément de protection contre les poussières (8) au moins un ergot de blocage (21) qui vient en prise avec au moins un évidement de blocage (22) réalisé sur le carter de machine (4) pour former une liaison d'enclenchement.

6. Machine-outil manuelle (1) selon l'une quelconque des revendications 1 à 5, **caractérisée en ce qu'**un biseau d'introduction (18) est réalisé sur la deuxième partie de carter (11).

7. Machine-outil manuelle (1) selon l'une quelconque des revendications 1 à 6, **caractérisée en ce qu'**est associée à l'élément de protection contre les poussières (8) au moins une structure de tamisage (12) qui chevauche au moins en partie l'au moins une entrée d'air (5) lorsque l'élément de protection contre les poussières (8) est enfilé.

8. Machine-outil manuelle (1) selon la revendication 7, **caractérisée en ce que** la structure de tamisage (12) présente une largeur de mailles, qui se situe entre 0,100 mm et 0,500 mm et est de l'ordre de manière particulièrement préférée de 0,250 mm.

9. Machine-outil manuelle (1) selon l'une quelconque des revendications 1 à 8, **caractérisée en ce que** la première partie de carter (10) et la deuxième partie de carter (11) sont reliées entre elles par une liaison par vissage.
